(19) **Europäisches Patentamt / European Patent Office / Office européen des brevets**

(11) **EP 4 084 199 B1**

(12) **EUROPEAN PATENT SPECIFICATION**

(45) Date of publication and mention
of the grant of the patent:
**25.03.2026 Bulletin 2026/13**

(21) Application number: **21877874.4**

(22) Date of filing: **15.09.2021**

(51) International Patent Classification (IPC):
***H01M 50/20*** (2021.01)

(52) Cooperative Patent Classification (CPC):
**H01M 50/293; H01M 50/211; H01M 50/242;**
Y02E 60/10

(86) International application number:
**PCT/KR2021/012574**

(87) International publication number:
**WO 2022/075622 (14.04.2022 Gazette 2022/15)**

(54) **BATTERY MODULE COMPRISING BUFFER PAD FOR PREVENTING DAMAGE TO BATTERY CELL, AND BATTERY PACK COMPRISING SAME**

BATTERIEMODUL MIT PUFFERKISSEN ZUR VERHINDERUNG VON SCHÄDEN AN DER BATTERIEZELLE UND BATTERIEPACK DAMIT

MODULE DE BATTERIE COMPRENANT UN COUSSINET TAMPON POUR EMPÊCHER UN ENDOMMAGEMENT D'ÉLÉMENT DE BATTERIE, ET BLOC-BATTERIE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2020 KR 20200128168**

(43) Date of publication of application:
**02.11.2022 Bulletin 2022/44**

(60) Divisional application:
**26151061.4 / 4 708 491**

(73) Proprietor: **LG Energy Solution, Ltd.**
**Seoul 07335 (KR)**

(72) Inventors:
• **LEE, Su Hang**
**Daejeon 34122 (KR)**
• **MOON, Jeong Oh**
**Daejeon 34122 (KR)**
• **KIM, Dong Wook**
**Daejeon 34122 (KR)**
• **KIM, Yong Il**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 893 291**    **WO-A1-2012/073439**
**WO-A1-2020/180114**    **CN-A- 106 848 114**
**CN-A- 107 394 081**    **JP-A- 2014 006 963**
**KR-A- 20170 135 597**    **KR-A- 20190 143 277**
**KR-B1- 102 060 830**    **US-A- 5 196 280**

## Description

[Technical Field]

The present invention relates to a battery module including a buffer pad for preventing a damage to a battery cell, and a battery pack including the same.

[Background Art]

Secondary batteries, which can be easily applied to various groups of products and have electric characteristics such as a high energy density, are currently widely applied to electric vehicles (EV), hybrid electric vehicles (HEV), etc. as well as mobile devices. Such secondary batteries are attracting attention as an environmentally friendly energy source for energy efficiency in that the use of fossil fuels can be significantly reduced, and the byproduct according to the use of energy is not generated at all.

Currently widely used secondary batteries include a lithium ion battery, a lithium polymer battery, a nickel-cadmium battery, a nickel hydrogen battery, a nickel zinc battery. The operating voltage of this unit secondary battery cell, that is, the unit battery cell, is about 2.5V to 4.2V. Therefore, when the higher output voltage is required, a plurality of battery cells may be connected in series to prepare a battery pack. Further, depending on the charge/discharge capacity required for the battery pack, a plurality of battery cells may be connected in parallel to prepare a battery pack. Thus, the number of battery cells included in the battery pack may be variously set according to the required output voltage or charge/discharge capacity.

On the other hand, when a battery pack is prepared by connecting a plurality of battery cells in series/parallel, generally, a battery module composed of a plurality of battery cells is first formed, and other elements are then added using a plurality of battery modules to thereby prepare a battery pack.

Generally, in a battery module, by suppressing the movement of a battery cell in form that applies pressure in the surface direction of the battery cell, the battery cell is not shaken in the fixed position by vibration or an impact. Further, a foam-type buffer pad capable of buffing the volume expansion of the battery cell due to expansion of the electrode and generation of gas is interposed between the battery cell and the module case.

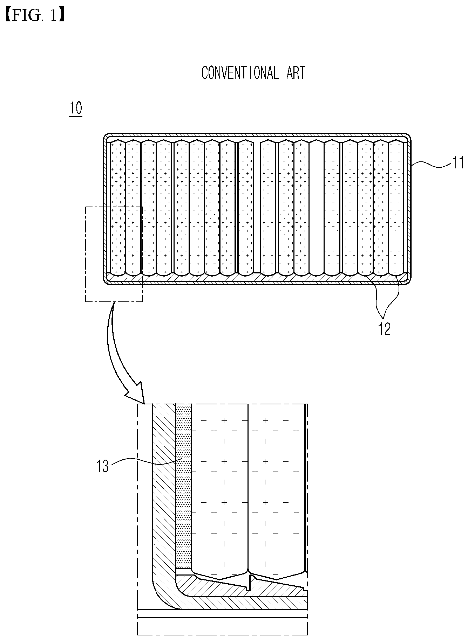

FIG. 1 is a schematic diagram showing a structure in which a battery cell laminate and a buffer pad are arranged in a conventional battery module.

Referring to FIG. 1, a battery module 10 has a structure in which a battery cell laminate 12 is accommodated in a module case 11, and a buffer pad 13 is interposed in a region where the outermost surface of the battery cell laminate 12 faces the module case 11. Further, as described above, in a pouch-type battery cell, a swelling phenomenon is shown along the width direction by charge and discharge. However, when the battery cell swells, the position of the battery cell is moved little by little due to the compression of the buffer pad 13, and the edge part of the battery cell at the outermost side of the battery cell laminate 12 may be damaged. Namely, the buffer pad 13, which is positioned at the outermost side of the battery cell laminate 12, may be broken at a large load, thereby failing to relieve the volume expansion of the battery cell and causing a damage to or deformation of the battery cell pouch.

[Prior art literature]

[Patent Document]

Korean Patent No. 10-2070684

US 5 196 280 A discloses an adhesive pad comprising a shrinkable layer that exposes an adhesive surface in response to heat, used to fix a battery within a housing.

CN 107 394 081 A discloses a battery case comprising compressive pads and thermal insulation elements to protect a battery pack from mechanical impact and temperature fluctuations.

CN 106 848 114 A discloses a battery heating device including a heating cushion, temperature sensors, and control logic for maintaining battery temperature within a preset range.

KR 2019 0143277 A discloses a battery module with air gaps formed between adjacent cells to delay heat transfer in case of abnormal cell heating.

[Disclosure]

[Technical Problem]

The present invention is believed to solve at least some of the above problems. For example, an aspect of the present invention provides a battery module including a buffer pad for preventing a damage to a battery cell, and a battery pack including the same.

[Technical Solution]

The present invention provides a battery module including a buffer pad for preventing a damage to a battery cell as defined in claim 1. Preferred embodiments are defined in dependent claims 2-7.

Further, the present invention provides a battery pack including the above-described battery module as defined in claim 8.

[Advantageous Effects]

A battery module including a buffer pad for preventing a damage to a battery cell, and a battery pack including the battery module according to the present invention can prevent a damage to the outermost battery cell at the time of the swelling of battery cells by including a buffer pad, where first and second regions having different physical properties are positioned, in a region contacting the outermost battery cell of the battery cell laminate.

[Brief Description of the Drawings]

FIG. 1 is a schematic diagram showing a structure in which a battery cell laminate and a buffer pad are arranged in a conventional battery module.

FIG. 2 is a schematic diagram showing a structure in which a battery cell laminate and a buffer pad are arranged in a battery module according to an embodiment of the present invention.

FIG. 3 is a graph showing the stress-strain curve of each of first and second regions constituting a buffer pad according to an embodiment of the present invention.

FIG. 4 is a diagram showing a buffer pad according to an example not forming part of the present invention.

FIG. 5 is a diagram showing a buffer pad according to another example not forming part of the present invention.

FIG. 6 is a diagram showing a buffer pad according to an embodiment of the present invention.

[Detailed Description of the Preferred Embodiments]

As the inventive concept allows for various changes and numerous embodiments, particular embodiments will be illustrated in the drawings and described in detail in the text.

The present invention relates to a battery module including a buffer pad for preventing a damage to a battery cell, and a battery pack including the same.

Generally, a battery module has a structure in which a battery cell laminate, generated by lamination of n battery cells, is accommodated in a battery case, and a buffer pad is interposed in a region where the battery cell at the outermost side of the battery cell laminate faces the module case. Further, a swelling phenomenon is shown in the pouch-type battery cell along the width direction by the charge and discharge. The position of the battery cell is moved little by little due to the compression of the buffer pad at the time of the swelling of the battery cell. In this case, a large load may be given to the foam-type buffer pad, and the buffer pad may be broken, thereby failing to relieve the volume expansion of the battery cell. Further, the edge part of the battery cell positioned at the outermost side of the battery cell laminate may be damaged.

As such, the present invention provides a battery module including a buffer pad for preventing a damage to a battery cell, and a battery pack including the same. In particular, according to the battery module of the present invention, it is possible to prevent a damage to the outermost battery cell at the time of the swelling of battery cells as first and second regions having different physical properties are positioned on the same plane in a region contacting the outermost battery cell of the battery cell laminate.

Hereinafter, a battery module including a buffer pad for preventing a damage to a battery cell, and a battery pack including the same according to the present invention will be described in detail.

A battery module according to the present invention includes: a module case; a battery cell laminate generated by laminating n battery cells, the battery cell laminate being accommodated in the module case; and a buffer pad which is interposed between an outermost battery cell of the battery cell laminate, and the module case. Herein, the n is an integer equal to or greater than 2. At this time, the buffer pad includes first and second regions which are different regions on a same plane, and the first and second regions have different physical properties.

In a specific example, in the battery module according to the present invention, the first and second regions satisfy following conditions 1 and 2:

[Condition 1]

R1>R2

[Condition 2]

E1<E2

Herein, R1 and R2 denote a hardness of the first and second regions, respectively, and E1 and E2 denote a modulus of elasticity of the first and second regions, respectively. Specifically, the hardness of the first region may be greater than that of the second region, but the modulus of elasticity of the first region may be smaller than that of the second region. Namely, the first region, which has a strength greater than that of the second region, may be positioned to face the edge part of the outermost side at the time of the swelling of the battery cell, thereby preventing a damage to the edge part of the battery cell. In particular, according to the battery module of the present invention, it is possible to prevent a damage to the outermost battery cell at the time of the swelling of battery cells as first and second regions having different physical properties are positioned on the same plane in a region contacting the outermost battery cell of the battery cell laminate. Specific explanations are described later.

In the present invention, the module case is a housing for accommodating a battery cell laminate therein and includes a storage space where battery cells are accommodated. The module case may be a general module case used to accommodate battery cells in a battery module and may further include a cover. Specifically, the module case may be a U-shaped frame or a mono frame. For example, the module case may be a mono frame.

In a battery module according to the present invention, a battery cell laminate is accommodated in a module case. Specifically, the battery cell laminate has a structure in which n (n is an integer equal to or greater than 2) battery cells are laminated. The number (n) of laminated battery cells may be changed depending on the number of battery cells which need electric connection or depending on the capacity of the battery module. For example, the number (n) of laminated battery cells of the battery cell laminate may be in a range of 2 to 100, 2 to 50, 2 to 30, 2 to 10, or 3 to 7.

On the other hand, if the battery cell is a secondary battery capable of charging and discharging, it is not particularly limited.

In a specific example, each battery cell constituting the battery cell laminate is a pouch type unit cell, and an electrode assembly of a positive electrode/separator/negative electrode structure is built in a laminate sheet exterior material in a manner that is connected to electrode leads formed outside the exterior material. The electrode leads may be drawn to the outside of the sheet and may be extended in the same or opposite direction to each other.

Figures of the present invention show only a pouch-type battery cell having a form where a pair of electrode leads are withdrawn in the opposite direction for the convenience of explanation, but the battery cell, which is applied to the battery module according to the present invention, is not particularly limited thereto, and a pair of electrode leads may be withdrawn in the same direction.

In the battery module according to the present invention, a buffer pad is interposed between the outermost battery cell of the battery cell laminate and the module case. Specifically, when the battery cell is expanded, the swelling of the cell may be controlled by the buffering action of the buffer pad, and a damage to the battery cell according to the expansion of the battery cell may be prevented. Further, the buffer pad is interposed between the outermost battery cell of the battery cell laminate, and the module case, and is arranged to cover one surface of the outermost battery cell of the battery cell laminate.

The buffer pad is divided into a first region and a second region and the first region and the second region have different physical properties. More specifically, the first region may be a high-rigidity pad, and the second region may be an elastic pad. In particular, since the first region is positioned to face the edge part of the battery cell in the buffer pad, the first region suppresses movement of the edge part of the battery cell, thereby preventing a damage to the battery cell.

Specifically, the first region may include at least one selected from the group consisting of a hard silicon pad, hard plastic and hard foam. The first region is a region for preventing movement of the battery cell at the time of the swelling of the battery cell and is preferably made of a high-rigidity material. The first region may be a hard silicon pad.

Further, the second region may include at least one selected from the group consisting of soft plastic and soft foam. Specifically, the second region may be made of a soft elastic material and may contain a material including a soft elastic material such as polyurethane foam (PU foam) or ethylene propylene diene monomer (EDPM). The material of the second region may be excellent in absorptiveness to vibration and repulsive power by compression. For example, the first region may include a hard silicon pad, and the second region may include a polyurethane foam.

Further, the battery cell laminate accommodated in the module case may have a structure in which n battery cells are erected in a lateral direction. This means a structure in which the battery cell laminate is erected in a direction perpendicular to the bottom surface of the module case. At this time, the buffer pad may be arranged on both side surfaces of the battery cell laminate. Specifically, the buffer pad may be arranged on both side surfaces of the battery cell laminate to be parallel to one surface of the battery cell.

In one example not forming part of the present disclosure, the buffer pad is divided into an upper portion and a lower portion in a state that is vertically erected. At this time, the second region is positioned on the upper portion of the buffer pad, and the first region is positioned on the lower portion of the buffer pad.

According to the present invention, the buffer pad is arranged in a region contacting the battery cell at the outermost side of the battery cell laminate, and the buffer pad is arranged to be parallel to the battery cell. Further, a high-rigidity first region of the buffer pad may be positioned at the lower end of the outermost side of the battery cell laminate, and a low-rigidity second region may be positioned at the upper end of the outermost side of the battery cell laminate. As such, when the battery cell swells, the movement of the lower end of the edge part of the battery cell contacting the first region of the buffer pad is suppressed to thereby prevent a damage to the battery cell pouch, and the second region of the buffer pad may absorb vibration or pressure for the swelling of the battery cell.

In another example not forming part of the present disclosure, the buffer pad is divided into an upper portion, a central portion, and a lower portion in a state that is vertically erected. At this time, the second region is positioned on the central portion of the buffer pad, and the first region is positioned on the lower portion and the upper portion of the buffer pad.

In a specific example not forming part of the present disclosure, the buffer pad is arranged in a region contacting the battery cell at the outermost side of the battery cell laminate, and the buffer pad is arranged to be parallel to the battery cell. Further, a high-rigidity first region of the buffer pad may be positioned at the lower end and the upper end of the outermost side of the battery cell laminate, and a low-rigidity second region may be positioned at the remaining portion. As such, when the battery cell swells, the movement of the lower end and the upper end of the edge part of the battery cell contacting the first region of the buffer pad is suppressed to thereby prevent a damage to the battery cell pouch, and the second region of the buffer pad may absorb vibration or pressure for the swelling of the battery cell.

In an example, the buffer pad is divided into a central portion and an outer portion in a state that is vertically erected. At this time, the second region is positioned on the central portion of the buffer pad, and the first region is positioned on the outer portion of the buffer pad.

In a specific example, the buffer pad is arranged in a region contacting the battery cell at the outermost side of the battery cell laminate, and the buffer pad is arranged to be parallel to the battery cell. Further, in the buffer pad, a high-rigidity first region may be positioned in a region contacting the edge of the battery cell at the outermost side of the battery cell laminate, and a low-rigidity second region may be positioned in the central portion having a large volume change in the battery cell. As such, when the battery cell swells, the movement of the edge part of the battery cell contacting the first region of the buffer pad is suppressed to thereby prevent a damage to the battery cell pouch, and the second region of the buffer pad may absorb vibration or pressure for the swelling of the battery cell.

In one example, the battery module according to the present invention may include an interface buffer pad. Specifically, the interface buffer pad is a buffer pad positioned between neighboring battery cells in the battery cell laminate. Further, the interface buffer pad may include at least one selected from the group consisting of soft plastic and soft foam. Specifically, the interface buffer pad may be made of a soft elastic material and may contain a material including a soft elastic material such as polyurethane foam (PU foam) or ethylene propylene diene monomer (EDPM).

In a specific example, an interface buffer pad is disposed between laminated battery cells in the battery cell laminate. At this time, the interface buffer pad may be arranged between respective 3 to 10 battery cells, 3 to 7 battery cells, or 3 to 5 battery cells. For example, the interface buffer pad may be disposed between respective 3 battery cells.

In one example, the battery module according to the present invention may further include a charge and discharge unit which is electrically connected to a battery cell laminate.

Specifically, the charge and discharge unit may supply power for charge to the battery cell laminate or receive discharge power from the battery cell laminate. Herein, supplying power to the battery cell laminate is not limited to supplying power which is sufficient for fully charging the battery cell laminate. The same may be applied to the meaning of receiving discharge power from the battery cell laminate, and thus repeated description thereof is omitted here.

Further, the battery cell laminate has a structure in which n battery cells are electrically connected in series or in parallel. For example, the n battery cells may be electrically connected in series, and neighboring battery cells may be electrically connected by a general bus bar or insulating bar.

Further, the present invention provides a battery pack including the above-described battery module. In a specific example, the battery pack according to the present invention may have a structure generated by combining one or more battery modules.

The battery pack is applicable to various types of energy storage devices and power sources. For example, the energy storage device is an Energy Storage System (ESS) that stores a large amount of electrical energy. In addition, the power source is applicable to the power source of a moving means such as a vehicle. The vehicle refers to any type of vehicle which uses secondary batteries as its auxiliary power source or main power source. Specifically, the vehicle includes a hybrid (HEV), a plug-in hybrid (PHEV), or a pure electric car (BEV, EV), and the like.

[Detailed Description of the Preferred Embodiments]

Hereinafter, various forms of a battery module including a buffer pad for preventing a damage to a battery cell according to the present invention will be described in detail with reference to drawings.

**(First embodiment)**

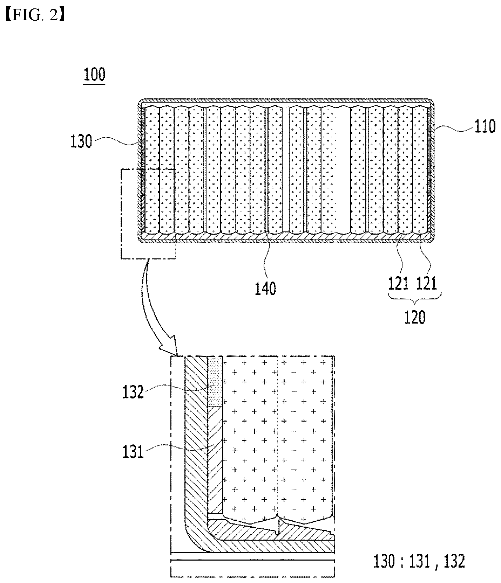

FIG. 2 is a schematic diagram showing a structure in which a battery cell laminate and a buffer pad are arranged in a battery module according to an embodiment of the present invention.
Referring to FIG. 2, a battery module 100 according to the present invention includes: a module case 110; a battery cell laminate 120 generated by laminating n battery cells 121 (n is an integer equal to or greater than 2), the battery cell laminate 120 being accommodated in the module case 110; and a buffer pad 130 which is interposed between an outermost battery cell 121 of the battery cell laminate 120, and the module case 110. At this time, the buffer pad 130 includes first and second regions 131 and 132 which are different regions on the same plane. Further, the first and second regions 131 and 132 have different physical properties.

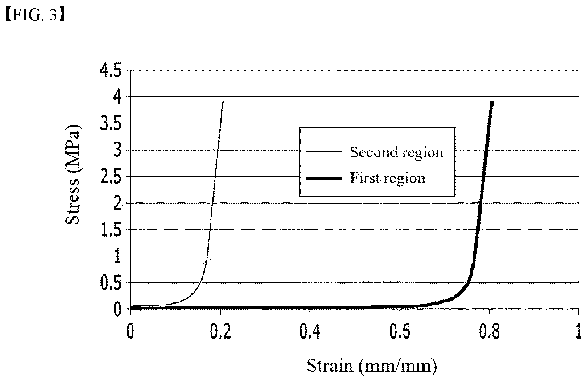

FIG. 3 is a graph showing the stress-strain of each of first and second regions constituting a buffer pad according to an embodiment of the present invention.
Referring to FIG. 3, physical properties of first and second regions of the buffer pad 130 are shown. Specifically, it is seen that in the buffer pad 130, the strain of the first region 131 is smaller than that of the second region 132. Namely, the first region may be a high-rigidity pad, and the second region may be a low-rigidity pad. Herein, the high-rigidity pad may suppress movement of the battery cell at the time of the swelling of the battery cell, and the low-rigidity pad may absorb vibration or pressure for the swelling of the battery cell.
According to the present invention, in the buffer pad 130, the first region 131 is formed of a hard silicon pad, and polyurethane foam is arranged in the second region 132.

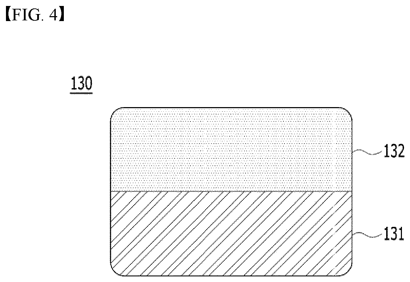

FIG. 4 is a schematic diagram showing a buffer pad including first and second regions according to an example not forming part of the present invention.
The buffer pad 130 has a structure including an upper portion and a lower portion which exist on the same plane in a vertically erected state. At this time, the second region 132 is positioned on the upper portion of the buffer pad 130, and the first region 131 is positioned on the lower portion of the buffer pad 130.
In a specific example not forming part of the present invention, the buffer pad 130 is arranged in a region contacting the battery cell 121 at the outermost side of the battery cell laminate 120, and the buffer pad 130 is arranged to be parallel to the battery cell 121. Further, a high-rigidity first region 131 of the buffer pad 130 may be positioned at the lower end of the outermost side of the battery cell laminate 120, and a low-rigidity second region 132 may be positioned at the upper end of the outermost side of the battery cell laminate 120. As such, when the battery cell swells, the movement of the lower end of the edge part of the battery cell 121 contacting the first region 131 of the buffer pad 130 is suppressed to thereby prevent a damage to the battery cell pouch, and the second region 132 of the buffer pad 130 may absorb vibration or pressure for the swelling of the battery cell 121.
In this regard, when the buffer pad and the conventional polyurethane foam in the first embodiment of the present invention was applied, the plastic deformation of the edge part of the battery cell at the outermost side was measured. Specifically, a battery cell laminate, which was generated by lamination of 24 battery cells, was accommodated in a battery module, and the swelling of the battery cells according to charge and discharge was caused. The width in the thickness direction of the battery cell laminate according to the swelling of the battery cell was measured, and the maximum strain of the battery cell at the outermost side was calculated. Further, the reference strain at which the battery cell was broken was known as 51.4% through the pre-tensile test.
When the buffer pad and the conventional polyurethane foam in the first embodiment were applied to the battery module, the plastic deformation measurement results were shown in Table 1 and Table 2, respectively.

[Table 1]

| Thickness in width direction of battery cell laminate (mm) | Maximum strain (%) |
|---|---|
| 222.6 | - |
| 226 | 8.2 |
| 227 | 12.8 |
| 228 | 18.2 |

(continued)

| Thickness in width direction of battery cell laminate (mm) | Maximum strain (%) |
|---|---|
| 229 | 26.6 |
| 230 | 33.7 |
| 231 | 39.6 |
| 231.35 | 51.4 |
| 232 | 73.7 |

[Table 2]

| Thickness in width direction of battery cell laminate (mm) | Maximum strain (%) |
|---|---|
| 222.6 | - |
| 226 | 25.4 |
| 227 | 29.6 |
| 228 | 36.7 |
| 229 | 50.6 |
| 230 | 65.4 |

Referring to Table 1 and Table 2, when the buffer pad in the first example was applied, the deformation of the battery cell was less. Specifically, referring to Table 1, in the battery module in which the buffer pad in the first example was applied, when the thickness in the width direction of the battery cell laminate was 230 mm, the maximum strain of the outermost battery cell was about 33.7%. In this regard, in the battery module in which the conventional polyurethane foam was applied in Table 2, when the thickness in the width direction of the battery cell laminate was 230 mm, the maximum strain of the outermost battery cell was about 65.4%, which exceeded the breaking limit of the battery cell. According to the present invention, it is possible to prevent a damage to the outermost battery cell at the time of the swelling of battery cells as first and second regions having different physical properties are positioned on the same plane in a region contacting the outermost battery cell of the battery cell laminate.

**(Second embodiment)**

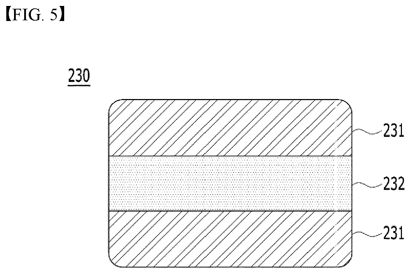

FIG. 5 is a schematic diagram showing a buffer pad including first and second regions according to an example not forming part of the present invention.

The buffer pad 230 includes an upper portion, a central portion, and a lower portion which exist on the same plane in a vertically erected state. At this time, the second region 232 is positioned on the central portion of the buffer pad 230, and the first region 231 is positioned on the lower portion and the upper portion of the buffer pad 230.

In a specific example not forming part of the present invention, the buffer pad 230 is arranged in a region contacting the battery cell at the outermost side of the battery cell laminate, and the buffer pad 230 is arranged to be parallel to the battery cell. Further, a high-rigidity first region 231 of the buffer pad 230 may be positioned at the lower end and the upper end of the outermost side of the battery cell laminate, and a low-rigidity second region 232 may be positioned at the remaining portion. As such, when the battery cell swells, the movement of the lower end and the upper end of the edge part of the battery cell contacting the first region 231 of the buffer pad 230 is suppressed to thereby prevent a damage to the battery cell pouch, and the second region 232 of the buffer pad 230 may absorb vibration or pressure for the swelling of the battery cell.

**(Third embodiment)**

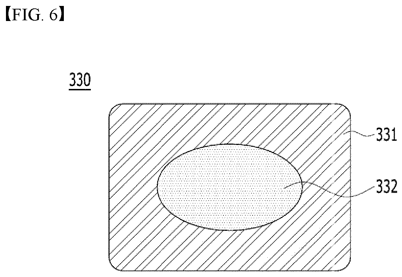

FIG. 6 is a schematic diagram showing a buffer pad including first and second regions according to an embodiment of the present invention.

The buffer pad 330 includes a central portion and an outer portion which exist on the same plane in a vertically erected state. At this time, the second region 332 is positioned on the central portion of the buffer pad 330, and the first region 331 is positioned on the outer portion of the buffer pad 330.

In a specific example, the buffer pad 330 is arranged in a region contacting the battery cell at the outermost side of the battery cell laminate, and the buffer pad 330 is arranged to be parallel to the battery cell. Further, in the buffer pad 330, a high-rigidity first region 331 may be positioned in a region contacting the edge of the battery cell at the outermost side of the battery cell laminate, and a low-rigidity second region 332 may be positioned in the central portion having a large volume change in the battery cell. As such, when the battery cell swells, the movement of the edge part of the battery cell contacting the first region 331 of the buffer pad 330 is suppressed to thereby prevent a damage to the battery cell pouch, and the second region 332 of the buffer pad 330 may absorb vibration or pressure for the swelling of the battery cell.

Although preferred examples of the present invention have been described with reference to drawings, it can be understood that those skilled in the art can make various modifications and changes to the present invention without departing from the scope of the invention as set forth in the claims below.

Therefore, the technical scope of the present invention should not be limited to the contents described in the detailed description of the specification but should be defined by the claims.

[Description of reference numerals]

10, 100: battery module
11, 110: module case
12, 120: battery cell laminate
121: battery cell
13, 130, 230, 330: buffer pad
131, 231, 331: first region
132, 232, 332: second region
140: interface buffer pad

## Claims

1. A battery module comprising:

   a module case (110);
   a battery cell laminate (120) generated by laminating n battery cells (121), n being an integer equal to or greater than 2, the battery cell laminate (120) being accommodated in the module case (110); and
   a buffer pad (330) which is interposed between an outermost battery cell of the battery cell laminate (120), and the module case (110), wherein the buffer pad is arranged to cover a surface of the outermost battery cell of the battery cell laminate,
   wherein the buffer pad (330) includes a first region (331) and a second region (332) which are different regions on a same plane, and the first region (331) and the second region (332) have different physical properties, the second region (332) being more elastic than the first region (331), and
   wherein the buffer pad (330) includes a central portion and an outer portion which exist on a same plane, wherein the second region (332) is positioned on the central portion of the buffer pad (330), and the first region (331) is positioned on the outer portion of the buffer pad (330).

2. The battery module of claim 1, wherein the battery cell laminate (120) is arranged in a state that the battery cells (121) are erected in a lateral direction.

3. The battery module of claim 1, wherein the first region (331) includes at least one selected from the group consisting of a silicone pad, plastic and foam that is harder than a material of the second region (332).

4. The battery module of claim 1, wherein the second region (332) includes at least one selected from the group consisting of plastic and foam that is softer than a material of the first region (331).

5. The battery module of claim 1, wherein an interface buffer pad (140) is additionally disposed between the battery cells (121) in the battery cell laminate (120), and
   wherein the interface buffer pad (140) is disposed every 3 to 10 battery cells (121).

6. The battery module of claim 1, wherein the battery cells (121) are electrically connected in series or in parallel.

7. The battery module of claim 1, further comprising a charge and discharge unit which is electrically connected to the battery cell laminate (120).

8. A battery pack comprising the battery module according to claim 1.

**Patentansprüche**

1. Batteriemodul aufweisend:

   ein Modulgehäuse (110);
   ein Batteriezellenlaminat (120), das durch Laminieren von n Batteriezellen (121) erzeugt wird, wobei n eine ganze Zahl gleich oder größer als 2 ist, wobei das Batteriezellenlaminat (120) in dem Modulgehäuse (110) aufgenommen ist; und
   ein Pufferpad (330), das zwischen einer äußersten Batteriezelle des Batteriezellenlaminats (120) und dem Modulgehäuse (110) angeordnet ist, wobei das Pufferpad angeordnet ist, um eine Oberfläche der äußersten Batteriezelle des Batteriezellenlaminats zu bedecken,
   wobei das Pufferpad (330) einen ersten Bereich (331) und einen zweiten Bereich (332) aufweist, die unterschiedliche Bereiche auf einer gleichen Ebene sind, und der erste Bereich (331) und der zweite Bereich (332) unterschiedliche physikalische Eigenschaften aufweisen, wobei der zweite Bereich (332) elastischer als der erste Bereich (331) ist, und
   wobei das Pufferpad (330) einen zentralen Abschnitt und einen äußeren Abschnitt aufweist, die auf einer gleichen Ebene existieren, wobei der zweite Bereich (332) auf dem zentralen Abschnitt des Pufferpads (330) positioniert ist, und der erste Bereich (331) auf dem äußeren Abschnitt des Pufferpads (330) positioniert ist.

2. Batteriemodul nach Anspruch 1, wobei das Batteriezellenlaminat (120) in einem Zustand angeordnet ist, in dem die Batteriezellen (121) in einer lateralen Richtung aufgerichtet sind.

3. Batteriemodul nach Anspruch 1, wobei der erste Bereich (331) zumindest eines enthält, das aus der Gruppe bestehend aus einem Silikonpad, Kunststoff und Schaum, der härter als ein Material des zweiten Bereichs (332) ist, ausgewählt ist.

4. Batteriemodul nach Anspruch 1, wobei der zweite Bereich (332) zumindest eines enthält, das aus der Gruppe bestehend aus Kunststoff und Schaum, der weicher als ein Material des ersten Bereichs (331) ist, ausgewählt ist.

5. Batteriemodul nach Anspruch 1, wobei ein Schnittstellenpufferpad (140) zusätzlich zwischen den Batteriezellen (121) in dem Batteriezellenlaminat (120) angeordnet ist, und
   wobei das Schnittstellenpufferpad (140) alle 3 bis 10 Batteriezellen (121) angeordnet ist.

6. Batteriemodul nach Anspruch 1, wobei die Batteriezellen (121) elektrisch in Reihe oder parallel geschaltet sind.

7. Batteriemodul nach Anspruch 1, ferner aufweisend eine Lade- und Entladeeinheit, die elektrisch mit dem Batteriezellenlaminat (120) verbunden ist.

8. Batteriepack aufweisend das Batteriemodul nach Anspruch 1.

**Revendications**

1. Module de batterie comprenant :

   un boîtier de module (110) ;
   un stratifié d'élément de batterie (120) généré par la stratification de n éléments de batterie (121), n étant un entier égal ou supérieur à 2, le stratifié d'élément de batterie (120) étant contenu dans le boîtier de module (110) ; et
   un coussinet tampon (330) intercalé entre un élément de batterie extérieur du stratifié d'élément de batterie (120) et le boîtier de module (110), le coussinet tampon étant agencé pour couvrir une surface de l'élément de batterie extérieur du stratifié d'élément de batterie,
   le coussinet tampon (330) comprenant une première zone (331) et une deuxième zone (332), qui sont des zones différentes sur un même plan, et la première zone (331) et la deuxième zone (332) possédant des propriétés physiques différentes, la deuxième zone (332) étant plus élastique que la première zone (331), et

le coussinet tampon (330) comprenant une partie centrale et une partie extérieure présentes sur un même plan, la deuxième zone (332) étant positionnée sur la partie centrale du coussinet tampon (330), et la première zone (331) étant positionnée sur la partie extérieure du coussinet tampon (330).

2. Module de batterie selon la revendication 1, le stratifié d'élément de batterie (120) étant agencé de sorte que les éléments de batterie (121) soient installés dans une direction latérale.

3. Module de batterie selon la revendication 1, la première zone (331) comprenant au moins une matière sélectionnée dans le groupe composé d'un tampon de silicone, de matière plastique, et de mousse, plus durs qu'un matériau de la deuxième zone (332).

4. Module de batterie selon la revendication 1, la deuxième zone (332) comprenant au moins une matière sélectionnée dans le groupe composé de matière plastique et de mousse, plus doux qu'une matière de la première zone (331).

5. Module de batterie selon, la revendication 1, un coussinet tampon d'interface (140) étant disposé en outre entre les éléments de batterie (121) dans le stratifié d'éléments de batterie (120), et

le coussinet tampon d'interface (140) étant éliminé tous les 3 à 10 éléments de batterie (121).

6. Module de batterie selon la revendication 1, les éléments de batterie (121) étant connectés électriquement en série ou en parallèle.

7. Module de batterie de la revendication 1, comprenant en outre un module de charge et de décharge relié électriquement au stratifié d'élément de batterie (120).

8. Bloc-batterie (1) comprenant le module de batterie selon la revendication 1.

【FIG. 1】

CONVENTIONAL ART

【FIG. 2】

【FIG. 3】

EP 4 084 199 B1

【FIG. 4】

【FIG. 5】

【FIG. 6】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102070684
- US 5196280 A
- CN 107394081 A
- CN 106848114 A
- KR 20190143277 A